# EUROPEAN PATENT SPECIFICATION

(11) **EP 3 103 605 B1**
(45) Date of publication and mention of the grant of the patent: **21.04.2021**
(21) Application number: 15746526.1
(22) Date of filing: 21.01.2015
(51) Int. Cl.: B28B 11/00, C04B 20/00, B05C 19/04, B05B 1/08, B05B 7/14, B05B 12/06, C04B 111/00, C04B 111/54

(54) **DEVICE, METHOD AND MACHINE FOR DEPOSITING POWDERED OR GRANULATED SOLIDS ON A SURFACE**
VORRICHTUNG, VERFAHREN UND MASCHINE ZUR ABSCHEIDUNG VON PULVERFÖRMIGEN ODER KÖRNIGEN FESTSTOFFEN AUF EINER OBERFLÄCHE
DISPOSITIF, PROCÉDÉ ET MACHINE POUR LE DÉPÔT DE MATIÈRES SOLIDES PULVÉRULENTES OU GRANULAIRES SUR UNE SURFACE

(30) Priority: 07.02.2014 ES 201430160
(43) Date of publication of application: 14.12.2016
(73) Proprietor: Kerajet, S.a., 12550 Almazora (ES)
(72) Inventor: TOMÁS CLARAMONTE, José Vicente, 12550 Almazora (ES); VICENT ABELLÁ, Rafael, 12550 Almazora (ES); QUEROL VILLALBA, Antonio Manuel, 12550 Almazora (ES)
(74) Representative: Clarke Modet & Co.
(86) International application number: PCT/ES2015/070038
(87) International publication number: WO 2015/118196

(56) References cited:
- EP-A1- 1 197 265
- EP-A1- 1 790 418
- WO-A1-2006/027212
- ES-T3- 2 212 212
- ES-T3- 2 238 332
- ES-T3- 2 401 465
- ES-U- 1 076 580
- JP-A- 2001 205 144
- US-A- 4 415 909
- US-A- 5 617 127
- KUMAR P ET AL: "Direct-write deposition of fine powders through miniature hopper-nozzles for multi-material solid freeform fabrication", RAPID PROTOTYPING JOURNAL, MCB UNIVERSITY PRESS, BRADFORD, GB, vol. 10, no. 1, 1 January 2004 (2004-01-01), pages 14-23, XP002365434, ISSN: 1355-2546, DOI: 10.1108/13552540410512499
- HUTCHINGS I. ET AL.: 'CAP. 2' INKJET TECHNOLOGY FOR DIGITAL FABRICATION 2013, CHICHESTER (U.K., XP008184530
- WIJSHOFF, H. STRUCTURE- AND FLUID-DYNAMICS IN PIEZOINKJET PRINTHEADS., [Online] VENLO,THE NETHERLANDS, pages 5 - 6, XP055216586 ISBN: 978-90-365-2582-4 Retrieved from the Internet: <URL:http://doc.utwente.nl/58366/1/thesis_W ijshoff.pdf>
- HUTCHINGS, I.: 'Ink-Jet Printing For The DecorationOf Ceramic Tiles: Technology And Opportunities' IN QUALICER 2010 - XI CONGRESO MUNDIAL FROM CALIDADDEL AZULEJO AND DEL PAVIMENTO CERáMICO, [Online] 12 December 2010, CASTELLóN(ESPAñA, pages 5 - 7, XP055216591 Retrieved from the Internet: <URL:http://www.qualicer.org/recopilatorio/ ponencias/pdf/2010234.pdf> [retrieved on 2010-02-16]

## Description

### Field of the invention

The present invention refers to a method, device and machine for reproducing designs or decorations onto a surface, particularly the surface of objects, by means of solids spraying, ejection or deposition, being these solids granulated, powdered and/or particulate compounds, and it is one object thereof to solve the problems that object decorations currently have, especially ceramic products such as stabs or tiles, problems which can also be extended to other fields of application of solid materials according to a determined pattern, design or motif, as it is the case with manufacturing artificial marble made from resins and inorganic solids.

### State of the art:

In the state of the art, there are multiple documents and patents referring to procedures or devices for applying powdered and granulated solid materials, without the object thereof being to transfer, by themselves, a design onto a surface, and thus dry glazing machines are known which can be installed in any glazing line, featuring extremely simple operation and being easy to clean, working fully automatically, by depositing an even powder glaze or variable grain size distribution glaze layer on the stab or tile; thus, for example, patents ES2003531, ES2004638, refer to this type of machines incapable of transferring, by themselves, any design to the deposition surface and being used to coat the whole surface.

EP1790418A1 discloses a sprinkling head for sprinkling powder on a glass plate.

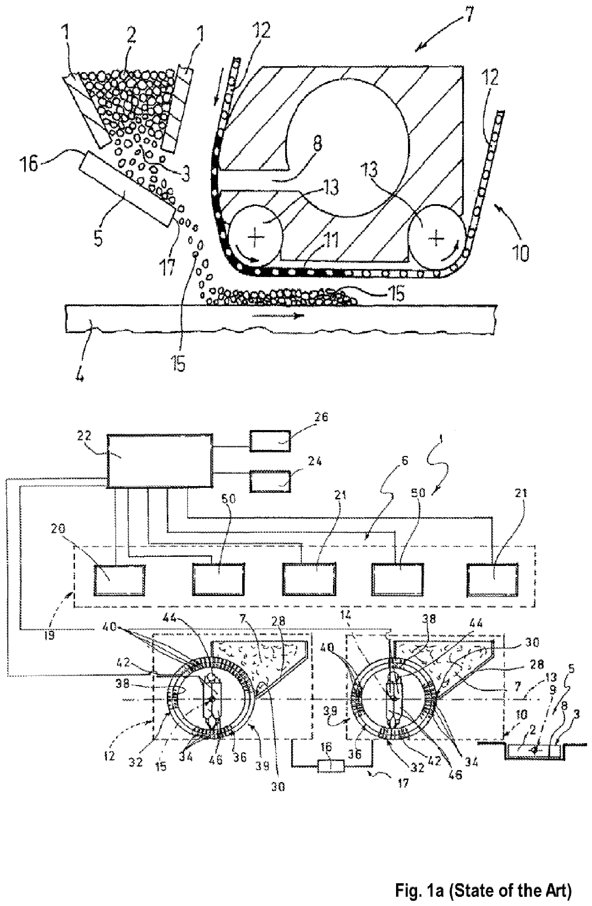

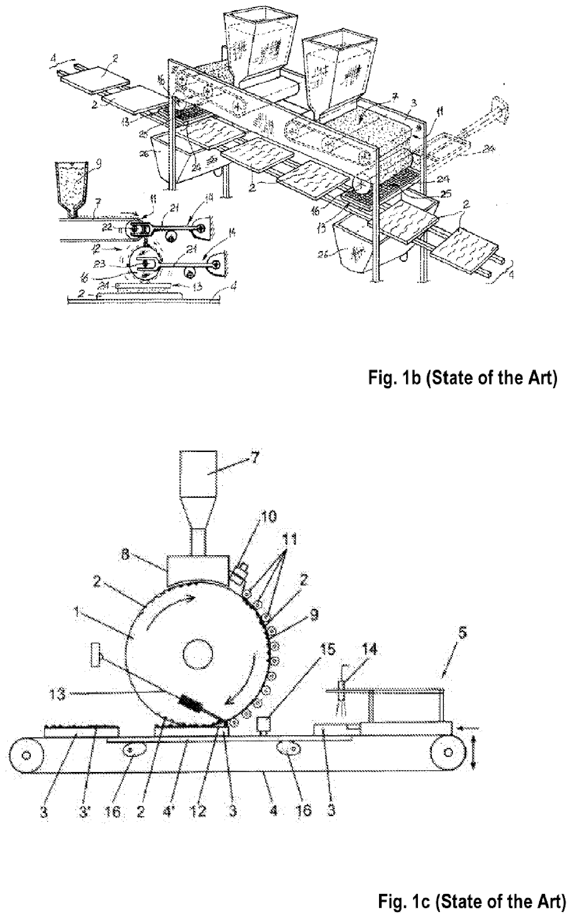

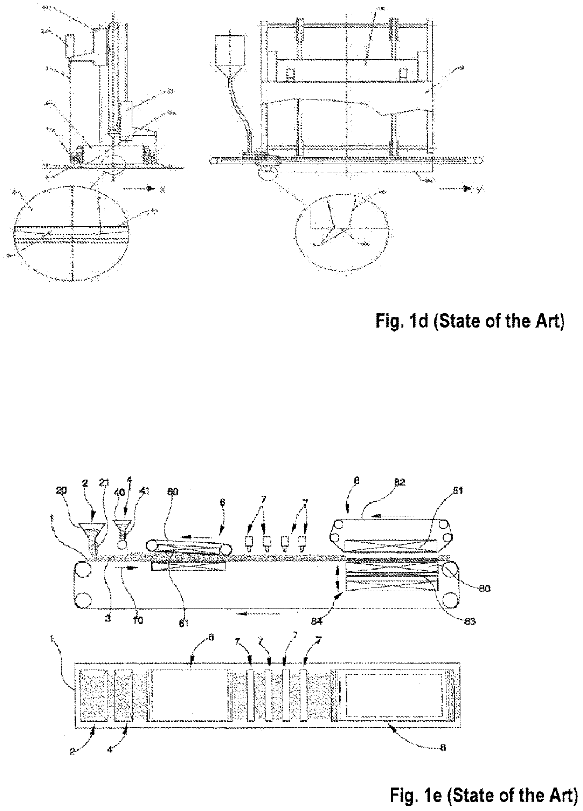

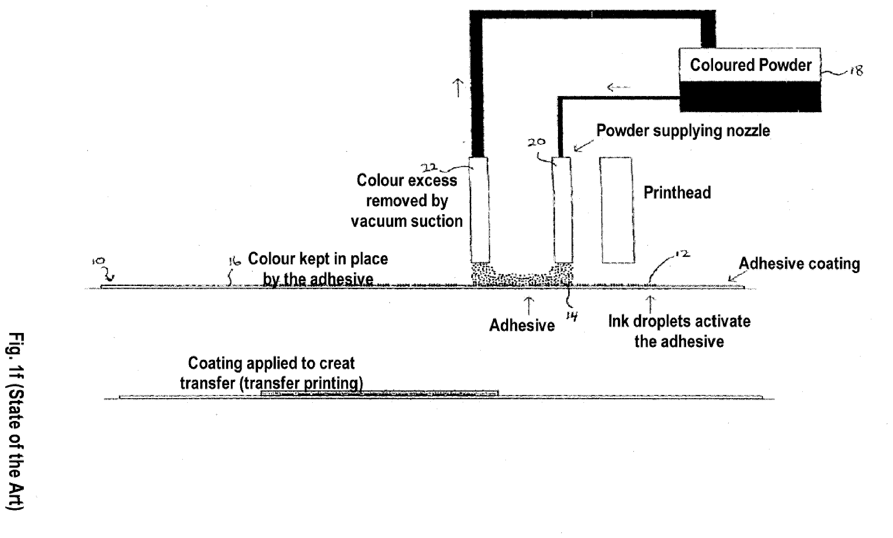

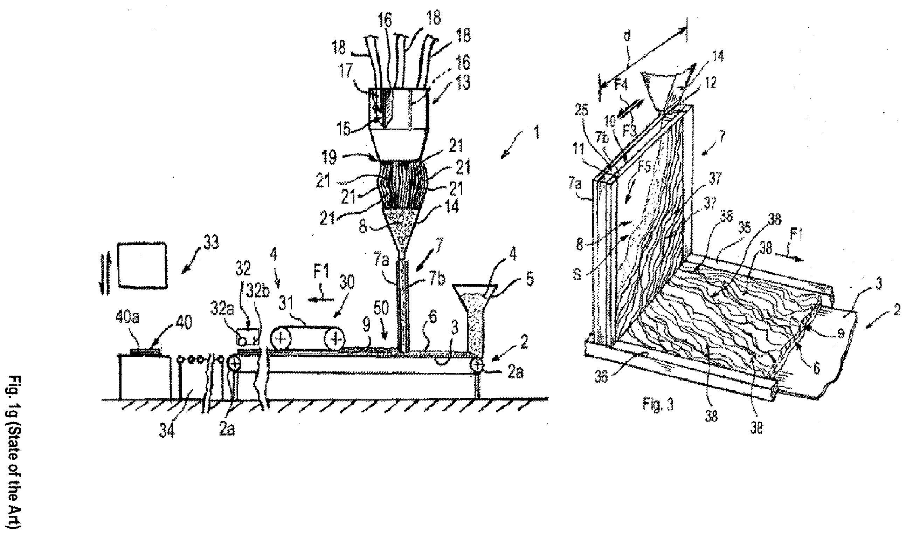

Patent ES2113283 (figure 1 b) discloses a variation of the previous ones, because of the simultaneous use of two or more colours, comprising at least a pair of short belts conveying the glazes, which are fed by respective top hoppers.

Patent ES2066724, discloses a machine for applying a powdered or liquid product on pieces being conveyed by belts, the purpose of which consists of making said function easier in an automatized way, without limitation of the object or product to be treated that must be dusted or that must receive sprayed liquid, being greatly regular thus allowing an even coating of all the exposed surfaces of said product; permitting certain degree of randomness when applying the powder or glaze, but being incapable of reproducing geometrical patterns or complex designs further than random marbling.

EP0768121 and EP0927687 (figure 1a) disclose several solutions for the application of materials according to a defined pattern engraved in a feeding drum, but they require the use of consumable materials (belts or rollers with a low relief inserted therein), which must be replaced and which enable the production of a limited series of variations in the motifs reproduced over the deposition surfaces, additionally causing the solids to be poured outside the deposition surface requiring the recovery and recycling thereof.

Patent ES2182672 (figure 1 c) refers to a machine similar to the previous one intended to transfer a bulk product, as for example sand, grit or similar), on the surface of a ceramic piece, producing thereon a relief which will form the ornamental motif intended by bulk product transfer on the ceramic piece, performed from the low relieves (2), and made on that purpose at the side surface of a rotary cylinder (1), although said technology is limited by the need of using consumable materials and it produces a limited variety of non-repetitive motifs.

ES2350533 (figure 1 d), refers to a device for dry decoration of ceramic bases made from other materials by dosing or deposition using screen printing.

EP0985503, EP0995563 and EP1334811 refer to press decoration, intending not to require a glazing line subsequent to the forming and pressing stage.

Particularly, EP1334811 (figure 1e) refers to a process and apparatus for decorating ceramic slabs or tiles, comprising the application of a first layer of powder (3) on a moving conveying plane (1) and by means of an inkjet system, of the colouring liquids reacting during firing, so decoration is obtained using inkjet technology by spraying dye dispersions, without being able to create structures, textures or relieves, having the limitations that the inkjet technology currently has regarding the particle size -usually lower than a micron-, density, viscosity and surface tension requirements to which formulations of the inks susceptible of being used are subjected to.

There are multiple patents in the state of the art such as ES2147233 (EP 0703863) to Benoíl Brault, with priority date 03.06.1993 (FR 9306652) which claims a method for making a high resolution motif on an object, comprising spraying on an object (1), using inkjet, droplets of a glue distributed according to a determined motif (4) and spraying or dusting a powdered composition (6), and removal of the composition deposited on the areas without glue.

EP0414363, G82376918 (US2004/0094260), WO2006/051238 and US4267209, are inventions directly related to this procedure and thus, particularly G82376918 (figure 1f) claims a process for transferring signs on a ceramic or glass substrate, by using a computer aided printer to print an adhering image area, on which the coloured powder is deposited on the paper in such a way that the powder adheres to the paper in the corresponding adhering image area, and removal of any coloured powder not being adhered on the substrate.

There are also specific patents, such as ES2111430, about specific machines to collect the excess material.

Additionally EP0444730, EP1043134, EP1256427, EP1266733, EP1879728, EP2050886, EP2069120, ES2087959, ES2143949, ES2173148, ES2180888, ES2212212, ES2212215, ES2227963, and ES2282566 describe the state of the art in the double charge decoration processes, so they refer to apparatus and methods for producing slabs in which the exposed face in made so as to simulate veins from natural stone, being a drawback of the described apparatuses the fact that the veins that can be made are substantially wide and very repetitive. Therefore, it is significantly difficult to obtain ceramic slabs in which the exposed face efficiently reproduces the variety of shapes and dimensions of the natural stones veins using an apparatus of a type known in the art.

Particularly, it is not possible to reproduce thin veins due to stratification processes, visible in natural stones.

Specially, EP2069120 (ES2401465) can be considered the nearest state of the art with respect to the present invention, referring to an apparatus and a method for producing a ceramic product, particularly a slab, having decorations that imitate natural stones, and which claims means, apparatus and production method of ceramic products, comprising providing dispersion means with a plurality of fluid ceramic materials and fill said dispersion means only partially through fixed distribution means; nevertheless, this technology is capable of reproducing motifs showing structures, texture or relieves.

Thus, there does not seem to be a solution to the technical problem of spraying or depositing a powdered or granulated material, such that it is possible to reproduce multiple motifs onto the surface on which the deposition is being performed, without this to involve a complicated mixing in complex double charge machines, the application of an adhesive using inkjet technology and a subsequent aspiration, usage of low-relief rollers or rotogravure, or that said motif can be simple and digitally varied and/or modified.

Particularly, there does not seem to exist in the market a method for deposition or spraying of powdered or granulated materials according to a pattern or design consisting of defined geometrical shapes and which adjust to the entire surface on which the spraying or deposition is performed, without it involving an application and a subsequent aspiration, or that said motif, design or pattern can be simple and digitally varied and/or modified.

Thus, to solve the technical problems that the state of the art is not capable to solve, the present invention describes a method, device and machine, for deposition of powdered or granulated solids on a surface, such that it is possible to reproduce a pattern or determined design, without requiring the use of consumable material, such as masks, rollers, and other transfer elements, which can be digitally controlled and the deposition of which is performed in a controlled manner onto the deposition surface without the need for removal of excess material, either on the deposition surface, or else the remaining material being poured outside said surface requiring removal or recycling thereof.

An object of the present invention is to obtain a method for applying solids in an equivalent manner to that of the application of solid dispersions in liquids by means of inkjet technology for spraying dispersions in liquids, widely known and object of several inventions of the applicant such as ES1076580, ES2399478, ES2354667, ES2343830, ES2392951, ES2302634, ES2219068, ES2152167, among others, such that the problems that said technology of solid dispersions deposition involve are prevented, as the limitations regarding the particle size, usually lower than a micron, density, viscosity and surface tension requirements to which formulations of the inks susceptible of being used are subjected to.

On the other hand, said technology currently uses printheads, the deposition volume capacity of which is clearly lower than the requirements of digital glazing or creation of three dimensional relieves and textures, without only using said printheads to spray binders or adhesives according to the methods described in the state of the art.

On the other hand, said printheads are completely incapable of managing or, even less, depositing dry or powdered materials, since the basic operation principle thereof consists of creating a volume variation in the injector chamber, such that there is pressure over the liquid which is finally sprayed.

### Description of the drawings:

### References

(1) Powdered or granulated solid deposition device
(2) Plate / surface containing the discharge opening
(3) Injector side walls
(4) Discharge buffer
(5) Separating grooves
(6) Nozzle // discharge opening
(7)
(8) Transducer / actuator
(9) Sensor / surface detector // piece detector
(10) nipple / injector
(11) powdered or granulated material
(20) surface on which solid deposition takes place
(23) feeding means / solid delivery means
(27) movement / displacement control means
(31) conveyor belt
(33) encoder
(r) separation distance between two adjacent grooves
(d) deactivation offset
(s) deformable section

Figures 1a, 1b, 1c, 1d, 1e, 1f and 1g, show several embodiments described in the state of the art.

Figure 2 represents a cross sectional view in a plane XZ of an injector as that being described, as it is shown. Figures 3a, 3b and 3c show a sequence of the injector movement shown in Fig. 2.

Figures 4a, 4b, 4c and 4d show several diagrams showing voltage vs time.

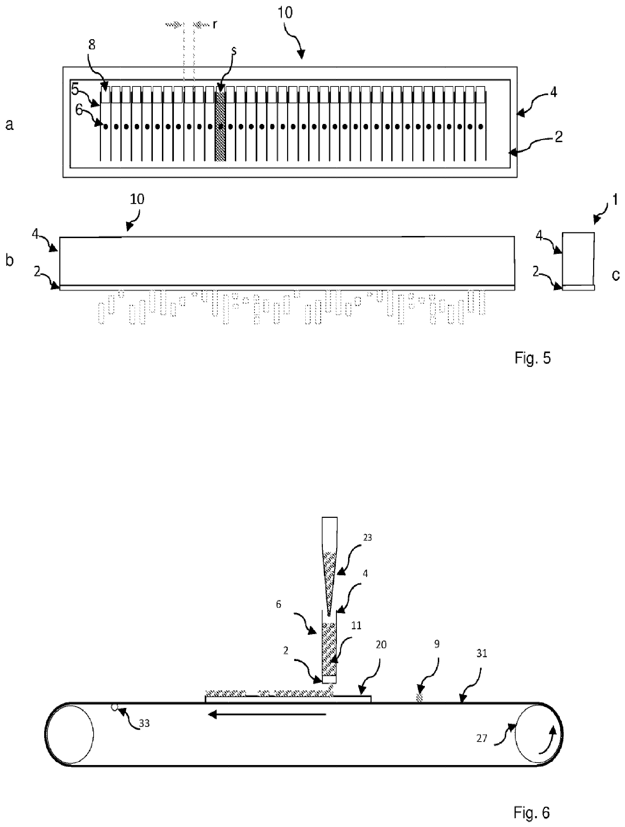

Figure 5 represents an embodiment of the device of the invention.

Figure 6 represents an example of industrial application of the present invention.

### Detailed description of the invention

.It is known the fact that there are several types of transducers which transform certain type of motion energy, mechanical stress or deformation, thereby electro-acoustic, electromagnetic, electromechanical, electrostatic, magnetostrictive and piezoelectric transducer or actuators are known (especially those using the inverse piezoelectric effect), depending on the electrical energy being transformed into sound, deformation or compression into electrical energy, etc.

In the terminology used in the state of the art there are different terms that can designate different concepts, thereby the equivalence between the following terms are adopted as synonyms in the description and claims:
Solids, particulate solids, powdered solids, granulated solids, particulates and powder. They refer, indistinctly, to solids of different morphology and composition having a particulate size lower than 1 mm, which may feature certain grade of humidity being low enough for the conveying thereof through mechanical or pneumatic means without undergoing caking.
Spraying, ejection, injection and deposition, They are defined as the action of discharging a determined amount of solid material (according to the definition above) through an orifice, towards a receiving surface or a deposition surface.
Actuator, Transducer Independently, they refer to elements transforming a determined type of energy into mechanical energy, by experimenting a movement or deformation.

The present invention describes a method for the deposition of powdered or granulated solids (solids) onto a surface (deposition surface), with at least one nipple or injector (injector), which contains an ejection opening (nozzle), being associated to at least one transducer, in such a way that the activation of said transducer (actuator), in contact with some of the injector surfaces, produces thereon oscillating or vibrating movements of the surface containing the ejection opening (plate) and in such a way that a solid, powdered or granulated material, located therein, is sprayed at the lower side of said nipple or injector through the injector opening (nozzle), and in a direction (z) being perpendicular to the plane in which said opening is located, such that said material is deposited onto a surface situated underneath the injector (deposition surface).

Said nipple or injector is made up, in a non-limiting way, of a surface being substantially rectangular containing at least one orifice which goes therethrough, positioned in the horizontal plane (XY), and, in the perimeter thereof, of vertical surfaces which, situated along the ejection axis (z) and above this horizontal plane (XY), in an upward direction from said lower surface, respectively make up the lower and side walls of a receptacle with a rectangular basis, said walls which form the at least one of said nipples or injectors, and which allow containing therein a controlled quantity of powdered, particulate or granulated solids.

Preferably, the plane matching the surface containing said at least one orifice of the nipple or injector, will be a substantially horizontal plane and the spraying axis will be perpendicular thereto and thus substantially vertical and downward. Therefore, the present invention describes a method for spraying solids onto a surface by using at least one nipple or injector provided with at least one discharge opening at the lower surface thereof, a solid container or buffer in the inner side of said injector, and at least one transducer associated in such a way that, upon activation and deactivation of said transducer, by means of the application of a voltage variation, a vibration movement of the lower surface thereof is produced in said injector, in the perpendicular direction thereto, in such a way that said solids are jet sprayed outside said injector and through the discharge openings, onto a surface located underneath said injector.

For the injector movements to take place in a controlled manner, that is, for the ejection to take place following a determined activation-deactivation pattern, and for the nipple to stop vibrating, once the activation impulse stops, it can be necessary to deactivate said injector by applying a variable voltage, featuring a certain degree of an offset (d) with respect to that of the activation, for the deactivation thereof.

The present invention also provides, in a non-limiting way, a device and apparatus using said method and the possible applications of said method, device and apparatus.

### Description of an embodiment of the invention

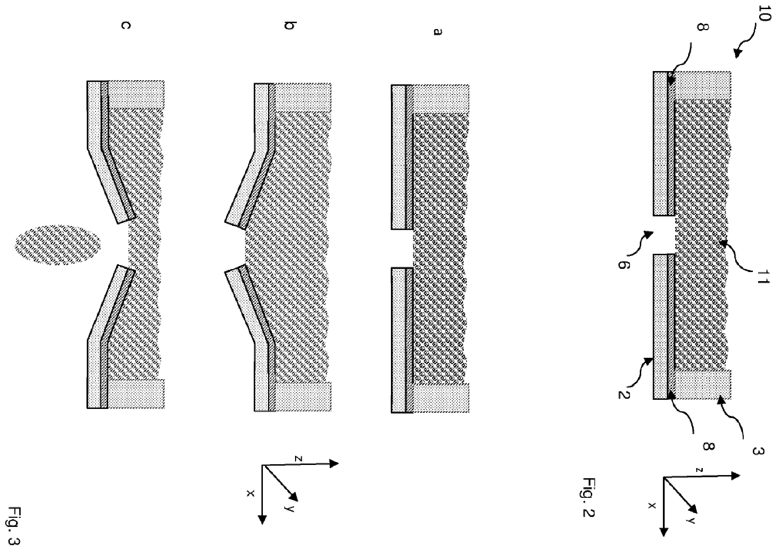

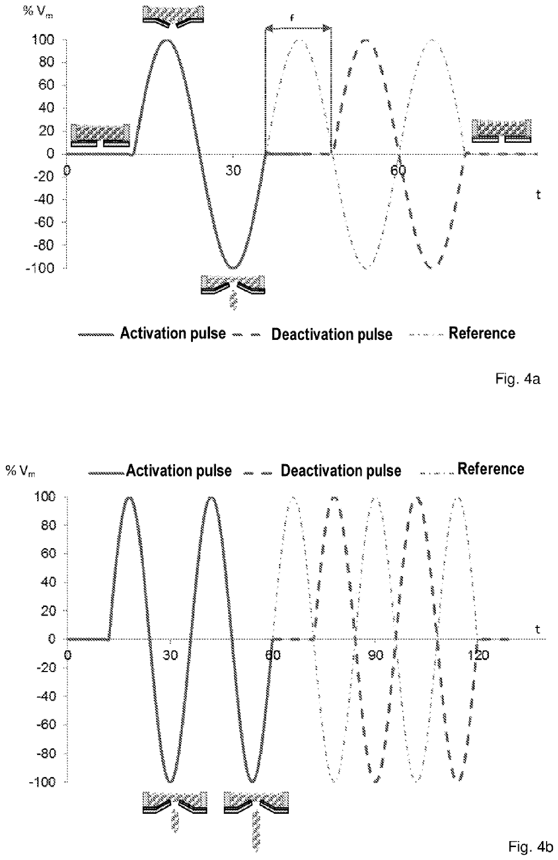

Figure 2 represents a cross-sectional view in the XZ plane of an injector of the type described above, to which a transducer actuator (8) is associated, in contact with the surface containing the ejection opening (2), in such a way that, applying a variable voltage on said actuator, there is an oscillating or vibrating movement induced on said surface, and said movement produces the solid ejection deposited in the inner part of said nipple or injector, such as it is shown in the sequence in figure 3a, b and c, and it shows a stand-by and movement sequence of the lower surface of the injector, which is a function of the waveform being applied, as it is shown in figure 4a.

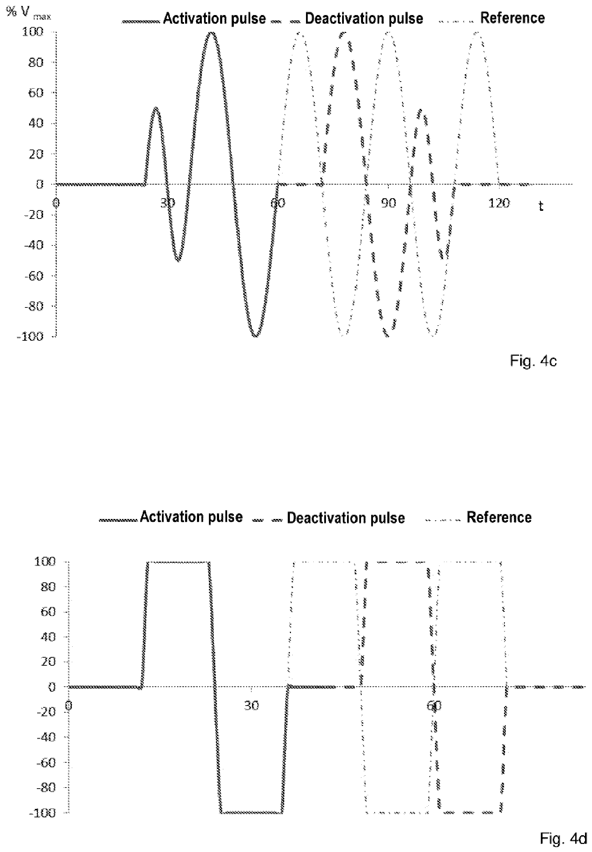

Figures 4 a, b, c and d exemplify, in a non-limitative manner, the several ways of voltage variations (waveform) that the activation-deactivation process of said injector can follow, such that the injector sprays a jet of solid material, the volume of which is predefined, among other factors, by the opening diameter, the maximum and minimum voltage applied, the oscillation frequency and the length of the activation-deactivation process.

The method for spraying solids (11) onto a surface (20), described in the invention, consists of using at least one nipple or injector (10), provided with at least a discharge opening (6) in the lower surface thereof (2), a solid container or buffer (4) in the lower part of said injector, and at least a transducer or actuator (8) associated to said injector, such that, by activating or deactivating said transducer, applying a voltage variation, a vibration movement of the lower surface is produced in said injector, in the perpendicular direction (z) thereto, such that said solids are jet sprayed outside said injector and through the discharge openings (6), onto a surface located underneath said injector.

### Detailed description of several embodiments of the invention

In a preferred embodiment of the method for spraying solids onto a surface, a device for solid deposition (1) is used consisting of a rectangular surface (2), being provided with grooves (5) and discharge openings (6) and at least one actuator (8), above which there is a discharge buffer (4) arranged which allows temporal storage of a discreet amount of solids (11).

Said buffer (4) essentially consists of four vertical walls enclosing an area featuring a regular plan, such that they constitute a structure with the shape of a hollow box for containing the solids (11), and whose lower surface, which constitutes the closure thereof, is the above described "plate" or surface containing the discharge opening (2), with the amount of solids contained in the discharge buffer being controlled and kept constant by means of sensors and feeding means (23).

The at least one actuator (8) is provided with means for connection thereof to control electronics, which in turn is connected somehow to means for controlling and communicating the device with external devices.

The "plate" (2) is built in such a way that it is provided with at least three separating grooves (5), regularly distributed, such that the separating distance (r) between two adjacent grooves is constant, and they define a deformable section (s), inside which there is at least one discharge opening (6), centrally and equidistantly positioned between each two of said adjacent grooves (5), in such a way that the separating distance between two groups of at least one discharge opening is constant (r).

The above at least one actuator (8) is in contact with the upper layer of the "plate" (2) which is capable of transmitting movement or vibration thereto, being capable of performing said movement or vibration transmission individually to each deformable section (s) comprising at least a discharge opening (6).

The connecting means allow control of the at least one actuator (8), such that said control allows individualized control of each deformable section (s), by means of control electronics through the device control and communication means.

The actuator (8) can be built based on an electro-acoustic, electromagnetic, electromechanical, electrostatic, magnetostrictive or piezoelectric transducer, particularly those using the inverse piezoelectric effect.

Thus, this invention refers to a method for deposition of powdered or granulated solids onto surfaces, consisting of the deposition of powdered or granulated materials on a surface according to a determined design or pattern, by using a discharge buffer (4) provided with a "plate" (2) having discharge openings (6) being individually controlled by the connecting and control means, in such a way that said "plate" (2) comprises a sheet provided with grooves (5) which are regularly distributed along thereof, wherein said sheet portion located between two of said grooves constitutes a deformable section (s) containing at least one discharge opening (6), and wherein by the individualized activation of an actuator (8) associated to each of said sections (s), by means of the controlled action of the control means, and according to a specific design or pattern, vibration can be induced, in such a way that said movement allows discharge of said powdered or granulated material (11) through said individually controlled opening (6) onto a surface (20) located under said device, which by means of the relative movement using the controlled conveying means is capable of covering at least all the surface on which the deposition of powdered or granulated solids (11) is performed.

Said linear conveying means consist of a conveyor belt (31) associated to a position sensor detecting the position of the surface moving onto said belt, and an encoder (33) which transmits, to the control means (27), information relating to the conveying speed and being provided with communication and control means.

In another embodiment of the present invention, said linear conveying means consist of a moving plane that moves in at least one direction of said plane containing said surface (20) and moving by action of the control means (27) according to a speed and distance being defined by the communication and control means.

And in another embodiment, said linear conveying means consist of a system for moving said injector or nipple (10) which moves in at least one direction parallel to the plane containing said surface (20) and being conveyed by the action of the linear conveying means, in a manner controlled by the control means (27), according to a speed and distance being defined by the communication and control means.

In the present invention, the surface on which the deposition of powdered or granulated solids (20) is performed is the surface of an object, the surface of a press mould or the surface of a casting or setting mould.

## Claims

1. Method for spraying solids onto a surface, consisting of spraying said solids (11) as a jet, by using at least one nipple or injector (10), provided with at least one discharge opening (6) in the lower surface thereof (2), associated to at least one transducer (8), in such a way that, by means of the appropriate solids supply (4) inside said injector (10) and by the activation and deactivation of said transducer (8), a movement or vibration is produced at the lower surface (2) of said injector in the direction (z), perpendicular to the plane containing said lower surface (2), in such a way that it sprays the solid particles (11) outside said injector (10) onto a surface (20) located underneath said injector; wherein the activation of said transducer (8) is produced by applying a periodic oscillating voltage, so that the at least one transducer (8) transmits an appropriate oscillating movement along axis (z) of said nipple or injector;
**characterized in that** the deactivation of said transducer (8) is produced by means of the application of a periodic oscillating voltage in phase opposition with respect to that of the activation, such that the vibration or movement induced in the activation is cancelled in said injector.

2. Method for spraying solids onto a surface according to claim 1, wherein the at least one nipple or injector (10) consists of a set of sub-injectors arranged one next to the other, aligned in a direction (Y), in such a way that they can be individually activated and print at least a straight line onto a surface (20), by means of the transducer (8) independently associated to said at least one injector (10), through connecting means and control electronics.

3. Method for spraying solids onto a surface according to any of previous claims, **characterized in that** said method includes linear conveying means and control means (27) associated thereto, such that the surface (20), on which the spraying is performed, is passed underneath said injectors or nipples (10), and the control electronics thereof activate and deactivate the injectors (10) transducers (8) individually and synchronically with the signal received from a sensor (9) detecting the presence of said surface (20) underneath the injectors (10), spraying solid material (11) onto the deposition surface (20) according to a determined design or pattern.

4. Device for deposition of powdered or granulated solids on a surface, comprising a discharge buffer (4) for containing powder or granulated solids (11), **characterized in that** the device (1) further comprises:
a plate (2) disposed in the lower surface of the discharge buffer (4), the plate (2) comprising a sheet provided with at least three grooves (5) regularly distributed along thereof, wherein each sheet portion located between two adjacent grooves (5) constitutes a deformable section (s) containing at least one discharge opening (6); an actuator (8) associated to each deformable section (s), in contact with the upper layer of the plate (2) and configured to transmit movement or vibration individually to each deformable section (s), said movement or vibration allowing discharge of the powder or granulated solids (11) through the at least one discharge opening (6) of the corresponding deformable section (s);
control electronics configured for the individualized activation of each actuator (8).

5. Device according to claim 4, wherein the actuator (8) is configured to transmit movement or vibration in a direction (z) perpendicular to the plane containing the plate (2).

6. Machine for deposition of powdered or granulated solids on a surface, comprising:
the device according to any of claims 4 to 5;
linear conveying means and control means (27) associated thereto, configured to convey a surface (20) underneath the device (1),
a sensor (9) configured for detecting the presence of the surface (20) underneath the device (1);
wherein the control electronics of the device (1) are configured to activate and deactivate the actuators (8) individually and synchronically with the signal received from the sensor (9), spraying powder or granulated solids (11) onto the surface (20) according to a determined design or pattern.

7. Machine according to claim 6, wherein the linear conveying means comprises a conveyor belt (31) associated to a position sensor detecting the position of the surface moving onto said belt, and an encoder (33) for transmitting to the control means (27) information relating to the conveying speed of the conveyor belt (31).

## Patentansprüche

1. Verfahren zum Aufsprühen von Feststoffen auf eine Oberfläche, bestehend aus dem strahlförmigen Aufsprühen der genannten Feststoffe (11) unter Verwendung mindestens eines Nippels oder Injektors (10) mit mindestens einer Abgabeöffnung (6) an seiner Unterseite (2) in Verbindung mit mindestens einem Transducer (8), dergestalt, dass durch die entsprechende Feststoffzufuhr (4) innerhalb des genannten Injektors (10) und durch Aktivierung und Deaktivierung des genannten Transducers (8) an der Unterseite (2) des genannten Injektors eine Bewegung oder Vibration in der Richtung (z) senkrecht zu der die genannte Unterseite (2) enthaltenden Ebene erzeugt wird, sodass die Feststoffpartikel (11) aus dem genannten Injektor (10) auf eine unterhalb des genannten Injektors befindliche Oberfläche (20) aufgesprüht werden;
wobei die Aktivierung des genannten Transducers (8) durch Anlegen einer periodischen Schwingspannung erzeugt wird, sodass der mindestens eine Transducer (8) eine entsprechende Schwingbewegung entlang der Achse (z) des genannten Nippels oder Injektors überträgt;
**dadurch gekennzeichnet, dass** die Deaktivierung des genannten Transducers (8) durch das Anlegen einer gegenphasig zur Aktivierungsspannung periodischen Schwingspannung erzeugt wird, sodass die bei der Aktivierung induzierte Vibration oder Bewegung in dem genannten Injektor aufgehoben wird.

2. Verfahren zum Aufsprühen von Feststoffen auf eine Oberfläche nach Anspruch 1, wobei der mindestens eine Nippel oder Injektor (10) aus einer Reihe von nebeneinanderliegenden, in einer Richtung (Y) ausgerichteten Unterinjektoren besteht, die einzeln aktiviert werden können und mithilfe des dem genannten mindestens einen Injektor (10) unabhängig zugeordneten Transducers (8) über Verbindungsmittel und Steuerelektronik zumindest eine gerade Linie auf eine Oberfläche (20) drucken können.

3. Verfahren zum Aufsprühen von Feststoffen auf eine Oberfläche nach einem der vorstehenden Ansprüche, **dadurch gekennzeichnet, dass** das genannte Verfahren eine Linearfördereinrichtung und eine mit ihr verknüpfte Steuereinrichtung (27) umfasst, wobei die zu besprühende Oberfläche (20) unter den genannten Injektoren oder Nippeln (10) hindurch geführt wird, und deren Steuerelektronik die Transducer (8) der Injektoren (10) entsprechend dem Signaleingang eines Sensors (9), der das Vorhandensein der genannten Oberfläche (20) unter den Injektoren (10) erfasst, einzeln und synchron aktiviert und deaktiviert, wodurch Festmaterial (11) nach einem bestimmten Schema oder Muster auf die Abscheidungsoberfläche (20) aufgesprüht wird.

4. Vorrichtung zum Abscheiden von pulverförmigen oder körnigen Feststoffen auf einer Oberfläche, umfassend einen Abgabepuffer (4) zur Aufnahme von pulverförmigen oder körnigen Feststoffen (11), **dadurch gekennzeichnet, dass** die Vorrichtung (1) ferner umfasst:
eine an der Unterseite des Abgabepuffers (4) angeordnete Platte (2), wobei die Platte (2) eine mit mindestens drei gleichmäßig über ihre Länge verlaufenden Rillen (5) versehene Platine umfasst, wobei jeder zwischen zwei benachbarten Rillen (5) angeordnete Platinenabschnitt einen verformbaren Abschnitt (s) mit mindestens einer Abgabeöffnung (6) bildet;
ein einem jeden verformbaren Abschnitt (s) zugeordnetes Stellglied (8), das mit der oberen Schicht der Platte (2) in Berührung steht und dazu ausgelegt ist, eine Bewegung oder Vibration individuell auf jeden verformbaren Abschnitt (s) zu übertragen, wobei die genannte Bewegung oder Vibration die Abgabe des pulverförmigen oder körnigen Feststoffs (11) durch die mindestens eine Abgabeöffnung (6) des entsprechenden verformbaren Abschnitts (s) ermöglicht;
Steuerelektronik, die zur individualisierten Aktivierung der einzelnen Stellglieder (8) ausgelegt ist.

5. Vorrichtung nach Anspruch 4, wobei das Stellglied (8) dazu ausgelegt ist, eine Bewegung oder Vibration in einer Richtung (z) senkrecht zu der die Platte (2) enthaltenden Ebene zu übertragen.

6. Maschine zur Abscheidung von pulverförmigen oder körnigen Feststoffen auf einer Oberfläche, umfassend:
die Vorrichtung nach einem der Ansprüche 4 bis 5;
eine Linearfördereinrichtung und eine mit ihr verknüpfte Steuereinrichtung (27), die zum Verfahren einer Oberfläche (20) unter der Vorrichtung (1) ausgelegt sind,
einen Sensor (9), der dazu ausgelegt ist, das Vorhandensein der Oberfläche (20) unter der Vorrichtung (1) zu erfassen;
wobei die Steuerelektronik der Vorrichtung (1) dazu ausgelegt ist, die Stellglieder (8) entsprechend dem Signaleingang des Sensors (9) einzeln und synchron zu aktivieren und zu deaktivieren, wodurch pulverförmige oder körnige Feststoffe (11) nach einem bestimmten Schema oder Muster auf die Oberfläche (20) aufgesprüht werden.

7. Maschine nach Anspruch 6, wobei die Linearfördereinrichtung ein Förderband (31), das mit einem Positionssensor zur Erfassung der Position der sich auf dem genannten Band bewegenden Oberfläche verknüpft ist, sowie einen Encoder (33) zur Übertragung von Informationen über die Fördergeschwindigkeit des Förderbandes (31) an die Steuereinrichtung (27) umfasst.

## Revendications

1. Procédé de pulvérisation de solides sur une surface, consistant à pulvériser lesdits solides (11) sous forme de jet, en utilisant au moins une tétine ou injecteur (10), muni d'au moins une ouverture de décharge (6) dans sa surface inférieure (2), associé à au moins un transducteur (8), de telle manière que, au moyen de l'alimentation appropriée en solides (4) à l'intérieur dudit injecteur (10) et par l'activation et la désactivation dudit transducteur (8), un mouvement ou une vibration est produit à la surface inférieure (2) dudit injecteur dans la direction (z), perpendiculaire au plan contenant ladite surface inférieure (2), de telle sorte qu'il pulvérise les particules solides (11) à l'extérieur dudit injecteur (10) sur une surface (20) située sous ledit injecteur ;
dans lequel l'activation dudit transducteur (8) est produite par l'application d'une tension oscillante périodique, de sorte que le au moins un transducteur (8) transmet un mouvement oscillant approprié le long de l'axe (z) de ladite tétine ou injecteur ;
**caractérisé en ce que** la désactivation dudit transducteur (8) est produite au moyen de l'application d'une tension oscillante périodique en opposition de phase par rapport à celle de l'activation, de sorte que la vibration ou le mouvement induit dans l'activation est annulé dans ledit injecteur.

2. Procédé de pulvérisation de solides sur une surface selon la revendication 1, dans lequel au moins une tétine ou injecteur (10) consiste en un ensemble de sous-injecteurs disposés les uns à côté des autres, alignés dans une direction (Y), de telle sorte qu'ils peuvent être activés individuellement et imprimer au moins une ligne droite sur une surface (20), au moyen du transducteur (8) associé indépendamment audit au moins un injecteur (10), par l'intermédiaire de moyens de connexion et d'une électronique de commande.

3. Procédé de pulvérisation de solides sur une surface selon l'une quelconque des revendications précédentes, **caractérisé en ce que** ledit procédé comprend des moyens de transport linéaire et des moyens de commande (27) associés à ceux-ci, de telle sorte que la surface (20), sur laquelle la pulvérisation est effectuée, passe sous lesdits injecteurs ou tétines (10), et son électronique de commande activent et désactivent les injecteurs (10), les transducteurs (8) individuellement et en synchronisme avec le signal reçu d'un capteur (9) détectant la présence de ladite surface (20) sous les injecteurs (10), en pulvérisant un matériau solide (11) sur la surface de dépôt (20) selon un dessin ou un modèle déterminé.

4. Dispositif pour le dépôt de solides en poudre ou en granulés sur une surface, comprenant un tampon de décharge (4) pour contenir des solides en poudre ou en granulés (11), **caractérisé en ce que** le dispositif (1) comprend en outre :
une plaque (2) disposée dans la surface inférieure du tampon de décharge (4), la plaque (2) comprenant une feuille munie d'au moins trois rainures (5) régulièrement réparties le long de celle-ci, dans laquelle chaque partie de la feuille située entre deux rainures (5) adjacentes constitue une section déformable (s) contenant au moins une ouverture de décharge (6) ;
un actionneur (8) associé à chaque section déformable (s), en contact avec la couche supérieure de la plaque (2) et configuré pour transmettre un mouvement ou une vibration individuellement à chaque section déformable (s), ledit mouvement ou vibration permettant la décharge de la poudre ou des solides granulés (11) à travers l'au moins une ouverture de décharge (6) de la section déformable (s) correspondante ;
une électronique de commande configurée pour l'activation individualisée de chaque actionneur (8).

5. Dispositif selon la revendication 4, dans lequel l'actionneur (8) est configuré pour transmettre un mouvement ou une vibration dans une direction (z) perpendiculaire au plan contenant la plaque (2).

6. Machine pour le dépôt de solides en poudre ou en granulés sur une surface, comprenant :
le dispositif selon l'une des revendications 4 à 5 ;
un moyen de transport linéaire et un moyen de commande (27) associé à celui-ci, configuré pour transporter une surface (20) sous le dispositif (1),
un capteur (9) configuré pour détecter la présence de la surface (20) sous le dispositif (1) ;
dans lequel l'électronique de commande du dispositif (1) est configurée pour activer et désactiver les actionneurs (8) individuellement et de manière synchrone avec le signal reçu du capteur (9), en pulvérisant de la poudre ou des solides granulés (11) sur la surface (20) selon une conception ou un modèle déterminé.

7. Machine selon la revendication 6, dans laquelle le moyen de transport linéaire comprend une bande transporteuse (31) associée à un capteur de position détectant la position de la surface se déplaçant sur ladite bande, et un codeur (33) pour transmettre au moyen de commande (27) des informations relatives à la vitesse de transport de la bande transporteuse (31).
